# EUROPEAN PATENT APPLICATION

(11) **EP 4 354 813 A1**
(43) Date of publication of application: **17.04.2024**
(21) Application number: 22804025.9
(22) Date of filing: 19.05.2022
(51) Int. Cl.: H04L 27/26

(54) **DATA TRANSMISSION METHOD AND APPARATUS, AND ELECTRONIC DEVICE AND STORAGE MEDIUM**

(30) Priority: 21.05.2021 CN 202110558719
(71) Applicant: ZTE Corporation, Shenzhen, Guangdong 518057 (CN)
(72) Inventor: XIN, Yu, Shenzhen, Guangdong 518057 (CN); BAO, Tong, Shenzhen, Guangdong 518057 (CN); XU, Jin, Shenzhen, Guangdong 518057 (CN)
(74) Representative: Regimbeau
(86) International application number: PCT/CN2022/093763
(87) International publication number: WO 2022/242705

(57) **Abstract**

Provided are a data transmission method and apparatus, an electronic device, and a storage medium. The data transmission method includes following steps: a sequence 1 is inserted in front of each first data sequence among L to-be-transmitted first data sequences and a sequence 2 is inserted behind each first data sequence so that L second data sequences are formed, where L is an integer greater than or equal to 2, the sequence 1 includes M sequences 3, the sequence 2 includes N sequences 3, each of M and N is an integer greater than 0, and a sequence 3 satisfies that KT₃ = T_{cp}, where T₃ denotes the time length of a time domain of the sequence 3, K is an integer greater than 0 and less than or equal to N, and T_{cp} denotes the time length of a cyclic prefix; and the L second data sequences are transmitted.

## Description

### TECHNICAL FIELD

The present application relates to the field of wireless communication technology, for example, a data transmission method and apparatus, an electronic device, and a storage medium.

### BACKGROUND

Fifth-generation New Radio (5G NR) adopts the orthogonal frequency-division multiplexing (OFDM) technology. Time-frequency resources constituted by subcarriers and OFDM symbols constitute radio physical time-frequency resources of a 5G NR system. The OFDM technology adopts a cyclic prefix (CP) to solve the problem of a multipath delay. Frequency selective channels are divided into a set of parallel flat fading channels, simplifying a channel estimation method. Based on CP-OFDM, the discrete Fourier transform spread OFDM (DFT-s-OFDM) technology can solve the problem of a high peak-to-average power ratio (PAPR) in the CP-OFDM by adding a discrete Fourier transform (DFT) before subcarrier mapping. Although the CP may resist the multipath delay, the CP does not carry any useful data, resulting in a waste of radio physical time-frequency resource overheads. Especially, when a frequency band is in a high-frequency range, for example, when the frequency band is higher than 52.6 GHZ, the overhead problem of the CP becomes more serious due to the increase of a subcarrier spacing and the reduction of a symbol length. The spectral leakage of a basic waveform exists in the CP-OFDM. Moreover, the 5G NR supports the mixed use of different parameter sets and supports different subcarrier spacings carried between adjacent sub-bands. Therefore, interference exists between the adjacent sub-bands. In the related art, during data transmission, the spectral leakage and interference between sub-bands are reduced through a time-domain soft CP and or a filtering method. However, with this method, a guard period still needs to be used between sub-bands of different subcarrier spacings, reducing the spectral efficiency of the data transmission.

### SUMMARY

A main object of embodiments of the present application is to provide a data transmission method and apparatus, an electronic device, and a storage medium so that the spectral leakage and interference between sub-bands are reduced, a guard period between different subcarrier spacings is reduced, and the spectral efficiency of data transmission is improved.

Embodiments of the present application provide a data transmission method. The method includes the steps described below.

A sequence 1 is inserted in front of each first data sequence among L to-be-transmitted first data sequences and a sequence 2 is inserted behind each first data sequence so that L second data sequences are formed, where L is an integer and L ≥ 2, the sequence 1 includes M sequences 3, the sequence 2 includes N sequences 3, each of M and N is an integer greater than 0, and a sequence 3 satisfies that KT₃ = T_{cp}, where T₃ denotes the time length of a time domain of the sequence 3, K is an integer and 0 < K ≤ N, and T_{cp} denotes the time length of a cyclic prefix; and the L second data sequences are transmitted.

Embodiments of the present application further provide a data transmission apparatus. The apparatus includes a data adjustment module and a data sending module.

The data adjustment module is configured to insert a sequence 1 in front of each first data sequence among L to-be-transmitted first data sequences and insert a sequence 2 behind each first data sequence so that L second data sequences are formed, where L is an integer and L ≥ 2, the sequence 1 includes M sequences 3, the sequence 2 includes N sequences 3, each of M and N is an integer greater than 0, and a sequence 3 satisfies that KT₃ = T_{cp}, where T₃ denotes the time length of a time domain of the sequence 3, K is an integer and 0 < K ≤ N, and T_{cp} denotes the time length of a cyclic prefix; and the data sending module is configured to transmit the L second data sequences.

Embodiments of the present application further provide an electronic device.

The electronic device includes one or more processors and a memory configured to store one or more programs, where when executed by the one or more processors, the one or more programs cause the one or more processors to implement the data transmission method according to any one of the embodiments of the present application.

Embodiments of the present application further provide a computer-readable storage medium for storing a computer program, where when the computer program is executed by a processor, the data transmission method according to any one of the embodiments of the present application is implemented.

In the embodiments of the present application, the sequence 1 and the sequence 2 are inserted in front of and behind each first data sequence among the multiple to-be-transmitted first data sequences respectively so that the multiple second data sequences are formed, where the inserted sequence 1 and the inserted sequence 2 are constituted by one sequence 3 or multiple sequences 3 respectively and an integer multiple of the time length of the time domain of the sequence 3 is the time length of a time domain of the cyclic prefix, and the generated multiple second data sequences are sent. Thus, it is implemented that the sequence 1 and the sequence 2 are inserted in front of and behind each first data sequence respectively so that the data in front of the data sequence is equal to the data behind the data sequence, which is conducive to maintaining the signal continuity of the data sequence in the time domain and can reduce the spectral leakage between subbands.

### BRIEF DESCRIPTION OF DRAWINGS

FIG. 1 is a flowchart of a data transmission method according to an embodiment of the present application;
FIG. 2 is a flowchart of another data transmission method according to an embodiment of the present application;
FIG. 3 is a flowchart of another data transmission method according to an embodiment of the present application;
FIG. 4 is an exemplary diagram of a data sequence according to an embodiment of the present application;
FIG. 5 is an exemplary diagram of another data sequence according to an embodiment of the present application;
FIG. 6 is an exemplary diagram of another data sequence according to an embodiment of the present application;
FIG. 7 is an exemplary diagram of another data sequence according to an embodiment of the present application;
FIG. 8 is an exemplary diagram of another data sequence according to an embodiment of the present application;
FIG. 9 is an exemplary diagram of another data sequence according to an embodiment of the present application;
FIG. 10 is an exemplary diagram of another data sequence according to an embodiment of the present application;
FIG. 11 is an exemplary diagram of another data transmission method according to an embodiment of the present application;
FIG. 12 is an exemplary diagram of another data sequence according to an embodiment of the present application;
FIG. 13 is a structural diagram of a data transmission apparatus according to an embodiment of the present application; and
FIG. 14 is a structural diagram of an electronic device according to an embodiment of the present application.

### DETAILED DESCRIPTION

The embodiments described herein are intended to explain the present application.

Suffixes such as "module", "part", or "unit" used to indicate elements in the subsequent description are merely used to facilitate the description of the present application and have no particular meaning in themselves. Therefore, "module", "part", or "unit" may be mixed.

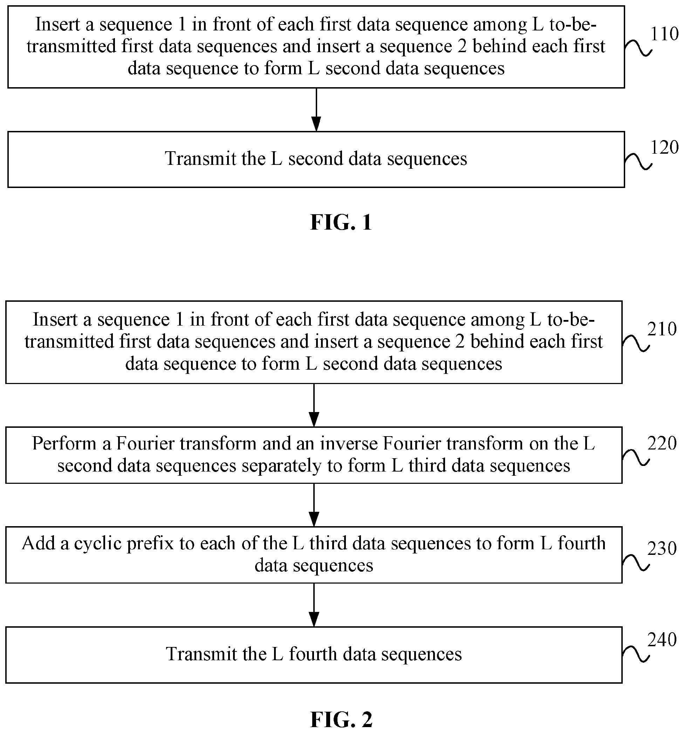

FIG. 1 is a flowchart of a data transmission method according to an embodiment of the present application. The embodiment of the present application is applicable to data modulation and sending. The method may be performed by a data transmission apparatus provided by an embodiment of the present application. The apparatus may be implemented by software and/or hardware. Referring to FIG. 1, the method provided by the embodiment of the present application includes the steps described below.

In 110, a sequence 1 is inserted in front of each first data sequence among L to-be-transmitted first data sequences and a sequence 2 is inserted behind each first data sequence so that L second data sequences are formed, where L is an integer and L ≥ 2, the sequence 1 includes M sequences 3, the sequence 2 includes N sequences 3, each of M and N is an integer greater than 0, and a sequence 3 satisfies that KT₃ = T_{cp}, where T₃ denotes the time length of a time domain of the sequence 3, K is an integer and 0 < K ≤ N, and T_{cp} denotes the time length of a cyclic prefix.

The first data sequence may be a data sequence which needs to be modulated and sent. The first data sequence may further include reference signal data. There may be one or more first data sequences. The sequence 1 and the sequence 2 may be inserted in front of or behind the first data sequence. The sequence 1 and the sequence 2 may include one or more sequences 3, respectively. A suitable sequence 3 may be designed so that the time length of the cyclic prefix is an integer multiple of the time length of the sequence 3 and the maximum value of the integer multiple does not exceed the number of sequences 3 included in the sequence 2.

In the embodiment of the present application, the multiple to-be-transmitted first data sequences may be processed. The sequence 1 and the sequence 2 may be inserted in front of and behind each first data sequence respectively, where the sequence 1 and the sequence 2 may be constituted by one or more sequences 3 and the sequence 3 satisfies that KT₃ = T_{cp}, where T₃ denotes the time length of the time domain of the sequence 3, K is an integer and 0 < K ≤ N, and T_{cp} denotes the time length of the cyclic prefix.

In 120, the L second data sequences are transmitted.

The second data sequences formed after the sequence 1 and the sequence 2 are inserted in each first data sequence may be sent.

In the embodiment of the present application, the sequence 1 and the sequence 2 are inserted in front of and behind each to-be-transmitted first data sequence respectively so that a second data sequence is formed, where the inserted sequence 1 and the inserted sequence 2 are constituted by multiple sequences 3 separately and the generated multiple second data sequences are sent. Thus, the data in front of the data sequence is equal to the data behind the data sequence, which is conducive to maintaining the signal continuity of the data sequence in a time domain and can reduce the spectral leakage between subbands.

FIG. 2 is a flowchart of another data transmission method according to an embodiment of the present application. The embodiment of the present application is described based on the preceding embodiment of the present application. Referring to FIG. 2, the method provided in the embodiment of the present application includes the steps below.

In 210, the sequence 1 is inserted in front of each first data sequence among the L to-be-transmitted first data sequences and the sequence 2 is inserted behind each first data sequence so that the L second data sequences are formed, where L is an integer and L ≥ 2, the sequence 1 includes the M sequences 3, the sequence 2 includes the N sequences 3, each of M and N is an integer greater than 0, and the sequence 3 satisfies that KT₃ = T_{cp}, where T₃ denotes the time length of the time domain of the sequence 3, K is an integer and 0 < K ≤ N, and T_{cp} denotes the time length of the cyclic prefix.

In 220, a Fourier transform and an inverse Fourier transform are performed on the L second data sequences separately so that L third data sequences are formed.

Fourier transform processing may refer to that data is converted from a time domain signal into a frequency domain signal. The inverse Fourier transform may refer to that data is converted from a frequency domain signal into a time domain signal. The number of sampling points of the Fourier transform in a period may be the same as or different from the number of sampling points of the inverse Fourier transform in a period. For example, when the number of sampling points of the Fourier transform in the period is less than the number of sampling points of the inverse Fourier transform in the period, the processing of the second data sequence may be oversampling.

In the embodiment of the present application, the Fourier transform and the inverse Fourier transform may be performed on each second data sequence separately. For different second data sequences, the number of points may be the same or different when the Fourier transform and the inverse Fourier transform are performed. For the same second data sequences, the number of points may be the same or different when the Fourier transform and the inverse Fourier transform are performed.

In 230, a cyclic prefix is added to each of the L third data sequences so that L fourth data sequences are formed.

A cyclic prefix may be a signal inserted in a spatial transmission period to eliminate the effects of multipath propagation and channel interference.

The cyclic prefix may be added to each third data sequence as a fourth data sequence.

In 240, the L fourth data sequences are transmitted.

In the embodiment of the present application, the generated fourth data sequences may be sent.

Based on the preceding embodiment of the present application, adding the cyclic prefix to each of the L third data sequences includes the step below.

For each third data sequence, a rear portion having a length of KT₃ in the third data sequence is added to the front of the third data sequence.

The rear information having the sequence length of KT₃ in each third data sequence may be added to the front of the corresponding third data sequence. For example, the third data sequence is information BC, information C is the rear information having the sequence length of KT₃ in the third data sequence, and the information C may be added to the front of the third data sequence BC so that CBC is formed.

Based on the preceding embodiment of the present application, performing the Fourier transform and the inverse Fourier transform on the L second data sequences separately includes the steps below.

The Fourier transform is performed on the L second data sequences, and then a frequency domain spectrum shaping operation is performed on the L second data sequences after the Fourier transform in a frequency domain; and the inverse Fourier transform is performed on the L second data sequences subjected to the frequency domain spectrum shaping operation.

Frequency domain spectrum shaping may refer to that a dot product of discrete frequency domain data generated by the Fourier transform and a spectrum shaping sequence is calculated so that a peak-to-average power ratio is reduced, where the spectrum shaping sequence may be a predetermined sequence.

In the embodiment of the present application, the Fourier transform may be sequentially performed on the generated multiple second data sequences to convert the second data sequences into frequency domain signals. The product of each second data sequence in the form of a frequency domain signal and a preset spectrum shaping sequence may be determined, and then the inverse Fourier transform may be performed on the frequency domain signal corresponding to the second data sequence subjected to the frequency domain spectrum shaping so that each second data sequence is converted into a time domain signal.

Based on the preceding embodiment of the present application, the number of operation points of the inverse Fourier transform is greater than the number of operation points of the Fourier transform.

The number of operation points may be the number of times that a spectrum is sampled in a period. For example, a 64-point FFT may refer to the operation of sampling the spectrum uniformly 64 times in one period according to a fast Fourier transform (FFT).

In the embodiment of the present application, the number of operation points of the inverse Fourier transform is greater than the number of operation points of the Fourier transform. That is, the sampling rate at which the spectrum is sampled during the conversion from the frequency domain to the time domain is higher than the sampling rate at which the spectrum is sampled during the conversion from the time domain to the frequency domain, which may be referred to as the oversampling for processing signals.

Based on the preceding embodiment of the present application, the length of the third data sequence is a window length for the Fourier transform processing, and the length of the fourth data sequence is the length of a data block or the length of an orthogonal frequency-division multiplexing (OFDM) symbol.

The third data sequence may be generated from the second data sequence via the Fourier transform, and the length of the third data sequence may be the same as the window length for the Fourier transform processing. The fourth data sequence is a data sequence of a transmission delay and may be sent in the data block or the orthogonal frequency-division multiplexing (OFDM) symbol, and correspondingly, the length of the fourth data sequence is the length of the data block or the length of the orthogonal frequency-division multiplexing (OFDM) symbol.

Based on the preceding embodiment of the present application, the start position of a second data sequence is the start position of Fourier transform processing and the end position of the second data sequence is the end position of Fourier transform processing.

The Fourier transform processing may be performed on the second data sequence, and the start position of the second data sequence and the end position of the second data sequence are used as the start position of the Fourier transform processing and the end position of the Fourier transform processing, respectively.

Based on the preceding embodiment of the present application, the time domain length of the second data sequence is equal to the time domain length of the third data sequence, and the time domain length of the second data sequence is the reciprocal of a subcarrier spacing.

The time domain length of the second data sequence may be the same as the time domain length of the third data sequence, and the time domain length of the second data sequence is the reciprocal of the subcarrier spacing.

Based on the preceding embodiment of the present application, values of M in the L second data sequences are the same, and values of N in the L second data sequences are different.

In the second data sequences, sequences 1 inserted in front may include the same number of sequences 3, and sequences 2 inserted behind may include different numbers of sequences 3.

Based on the preceding embodiment of the present application, in the case where the values of N in the L second data sequences are different, the L first data sequences have different lengths, the L second data sequences have the same length, the L third data sequences have the same length, and the L fourth data sequences have the same length.

In the embodiment of the present application, the sequence 2 inserted in each of the first data sequences includes a different number of sequences 3, that is, the values of N are different. If the first data sequences have the different lengths, the sequence 2 including a different number of sequences 3 may be inserted into each of the first data sequences, that is, the values of N in the sequences 2 are different. Thus, the second data sequences may have the same length, the third data sequences may have the same length, and the fourth data sequences may have the same length.

Based on the preceding embodiment of the present application, transmitting the L second data sequences includes transmitting the L second data sequences in L adjacent data blocks sequentially.

The multiple second data sequences may be transmitted in the L adjacent data blocks.

Based on the preceding embodiment of the present application, transmitting the L second data sequences includes transmitting the L second data sequences in L data blocks in adjacent slots.

The multiple second data sequences may be transmitted in the L adjacent slots.

Based on the preceding embodiment of the present application, transmitting the L second data sequences includes at least one of the cases below.

The L second data sequences are transmitted in the same slot, and sequences 3 in the L second data sequences are the same; or the L second data sequences are transmitted in different slots, and sequences 3 in the L second data sequences are different.

In the embodiment of the present application, the generated multiple second data sequences may be transmitted in the same slot. When the second data sequences are transmitted in the same slot, sequences 1 inserted in the second data sequences may include the same content of sequences 3, and sequences 2 inserted in the second data sequences may include the same content of sequences 3. The generated multiple second data sequences may be transmitted in the different slots. The sequences 1 inserted in the second data sequences transmitted in the different slots may include the different content of sequences 3, and the sequences 2 inserted in the second data sequences transmitted in the different slots may include the different content of sequences 3.

Based on the preceding embodiment of the present application, each of the sequence 1 and the sequence 2 is a reference sequence, where the reference sequence includes at least one of a preset sequence or a sequence already known by a receiving end.

Each of the sequence 1 and sequence 2 may be the reference sequence, where the reference sequence may be the preset sequences and/or the sequence already known by the receiving end. For example, the sequence already known by the receiving end may include a sequence set according to protocol standards, a sequence which has been sent, or the like.

Based on the preceding embodiment of the present application, the first data sequence includes data modulated by a constellation point and P pieces of reference sequence data, where P ≥ 0.

The first data may be constituted by the data modulated by the constellation point and multiple reference data sequences.

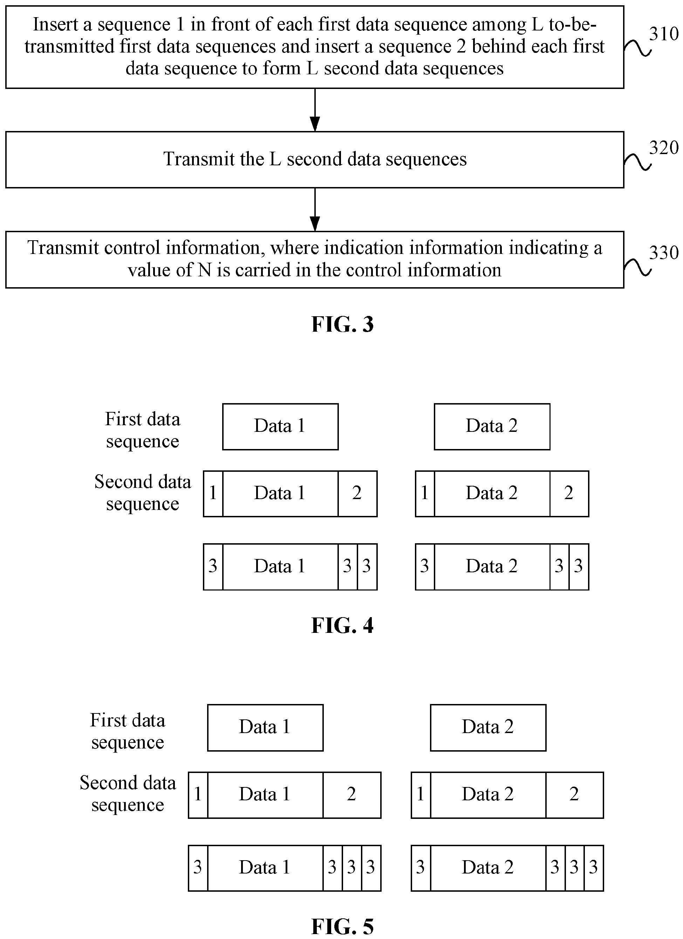

FIG. 3 is a flowchart of another data transmission method according to an embodiment of the present application. The embodiment of the present application is described based on the preceding embodiment of the present application. Referring to FIG. 3, the method provided in the embodiment of the present application includes the steps below.

In 310, the sequence 1 is inserted in front of each first data sequence among the L to-be-transmitted first data sequences and the sequence 2 is inserted behind each first data sequence so that the L second data sequences are formed, where L is an integer and L ≥ 2, the sequence 1 includes the M sequences 3, the sequence 2 includes the N sequences 3, each of M and N is an integer greater than 0, and the sequence 3 satisfies that KT₃ = T_{cp}, where T₃ denotes the time length of the time domain of the sequence 3, K is an integer and 0 < K ≤ N, and T_{cp} denotes the time length of the cyclic prefix.

In 320, the L second data sequences are transmitted.

In 330, control information is transmitted, where indication information indicating a value of N is carried in the control information.

The control information may be information for controlling the demodulation of the second data sequence. The control information may include one or more fields, and information on different fields may separately represent different information used for the demodulation. The indication information may indicate the number of sequences 3 included in the sequence 2 inserted into the second data sequence. The indication information may be information of one or more fields in the information format of the control information, and the fields may be preset or specified by a protocol.

In the embodiment of the present application, after each second data sequence is sent, the control information for controlling the demodulation of the second data sequence may also be sent, and the information indicating the number of sequences 3 included in the sequence 2 inserted into each second data sequence may be carried in the control information.

Based on the preceding embodiment of the present application, transmitting the control information includes transmitting the control information through a downlink control channel or an uplink control channel.

The control information may be the control information transmitted through the downlink control channel or the control information transmitted through the uplink control channel.

Based on the preceding embodiment of the present application, transmitting the control information includes transmitting the control information through downlink radio resource control (RRC) signaling or uplink radio resource control (RRC) signaling.

In the embodiment of the present application, the control information may be transmitted in the downlink radio resource control signaling or the uplink radio resource control signaling.

Based on the preceding embodiment of the present application, the sequence 1 and/or the sequence 2 are a data sequence modulated by π/2 binary phase shift keying.

In the embodiment of the present application, at least one of the sequence 1 or the sequence 2 may be the data sequence modulated by the π/2 binary phase shift keying (BPSK).

In an example embodiment, before L to-be-sent data sequences are transmitted, time-frequency domain modulation may be performed on each of the data sequences. FIG. 4 is an exemplary diagram of a data sequence according to an embodiment of the present application. Referring to FIG. 4, the L to-be-transmitted first data sequences include data 1 and data 2, that is, L = 2 and the two first data sequences are included. In another embodiment, a value of L may be any integer greater than or equal to 2. A sequence 1 and a sequence 2 are inserted in front of and behind the to-be-transmitted data 1 respectively so that the first one of second data sequences is formed, where the sequence 1 may be constituted by one sequence 3, the sequence 2 may be constituted by two sequences 3, a value of M in the first one of the second data sequences is 1, and a value of N in the first one of the second data sequences is 2. A sequence 1 and a sequence 2 are inserted in front of and behind the to-be-transmitted data 2 respectively so that the second one of the second data sequences is formed, where the sequence 1 is constituted by one sequence 3, the sequence 2 is constituted by two sequences 3, a value of M in the second one of the second data sequences is 1, and a value of N in the second one of the second data sequences is 2. In the embodiment of the present application, the time length T₃ of a time domain of a sequence 3 is equal to the time length T_{cp} of a cyclic prefix. The value of M in the first one of the second data sequences is the same as the value of M in the second one of the second data sequences, and the value of N in the first one of the second data sequences is the same as the value of N in the second one of the second data sequences.

In an example embodiment, before the L to-be-sent data sequences are transmitted, modulation may be performed on each of the data sequences. FIG. 5 is an exemplary diagram of another data sequence according to an embodiment of the present application. Referring to FIG. 5, the L to-be-transmitted first data sequences include data 1 and data 2, that is, L = 2. A sequence 1 and a sequence 2 are inserted in front of and behind the to-be-transmitted data 1 respectively so that the first one of second data sequences is formed, where the sequence 1 may be constituted by one sequence 3, the sequence 2 may be constituted by three sequences 3, and M = 1 and N = 3 in the first one of the second data sequences. A sequence 1 and a sequence 2 are inserted in front of and behind the to-be-transmitted data 2 respectively so that the second one of the second data sequences is formed, where the sequence 1 is constituted by one sequence 3, the sequence 2 is constituted by three sequences 3, and M = 1 and N = 3 in the second one of the second data sequences. In the embodiment of the present application, the time length T₃ of a time domain of a sequence 3 may be equal to half the time length T_{cp} of a cyclic prefix, and the sequence 3 satisfies that KT₃ = T_{cp}, where K = 2, and K < N. M has the same value and N has the same value in the L second data sequences formed in the embodiment of the present application.

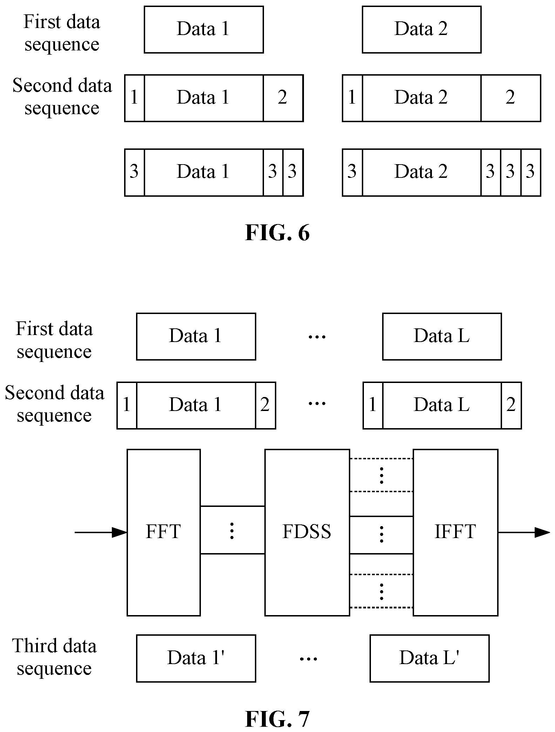

In an example embodiment, before the L to-be-sent data sequences are transmitted, time-frequency domain modulation may be performed on each of the data sequences. FIG. 6 is an exemplary diagram of another data sequence according to an embodiment of the present application. Referring to FIG. 6, the L to-be-transmitted first data sequences are data 1 and data 2 separately, that is, L = 2. A sequence 1 and a sequence 2 are inserted in front of and behind the to-be-transmitted data 1 respectively so that the first one of second data sequences is formed, where the sequence 1 is constituted by one sequence 3, the sequence 2 is constituted by two sequences 3, and M = 1 and N = 2 in the first one of the second data sequences. A sequence 1 and a sequence 2 are inserted in front of and behind the to-be-transmitted data 2 respectively so that the second one of the second data sequences is formed, where the sequence 1 is constituted by one sequence 3, the sequence 2 is constituted by three sequences 3, and M = 1 and N = 3 in the second one of the second data sequences. The time length T₃ of a time domain of a sequence 3 is equal to the time length T_{cp} of a cyclic prefix, and KT₃ = T_{cp}, where K = 1, and K < N. M has the same value and N has different values in the L second data sequences formed in the embodiment of the present application.

In an example embodiment, before the L to-be-sent data sequences are transmitted, modulation may be performed on each of the data sequences. FIG. 7 is an exemplary diagram of another data sequence according to an embodiment of the present application. Referring to FIG. 7, a sequence 1 and a sequence 2 are inserted in front of and behind each of the L to-be-transmitted first data sequences respectively so that L second data sequences are formed, where the sequence 1 is constituted by M sequences 3, and the sequence 2 is constituted by N sequences 3. The FFT is performed on the L second data sequences separately. The frequency domain spectrum shaping (FDSS) operation is performed on the second data sequences after the FFT in the frequency domain. Then, null subcarriers are added to two sides of the frequency domain data separately. Then, the inverse Fast Fourier transform (IFFT) is performed on the frequency domain data to which the null subcarriers are added so that L third data sequences are formed. The number of operation points of the IFFT is greater than the number of operation points of the FFT, that is, a third data sequence is an oversampled data sequence. The time domain length of the second data sequence is equal to the time domain length of the third data sequence and is equal to the reciprocal of a subcarrier spacing. A rear portion having a length of KT₃ in data 1', the first one of the third data sequences, may be added to the front of the data 1', the first one of the third data sequences so that the first one of four data sequences is formed. A rear portion having a length of KT₃ in data 2', the second one of the third data sequences, may be added to the front of the data 2', the second one of the third data sequences, so that the second one of the four data sequences is formed. T₃ denotes the time length of a time domain of a sequence 3. In the embodiment of the present application, a value of K is 1.

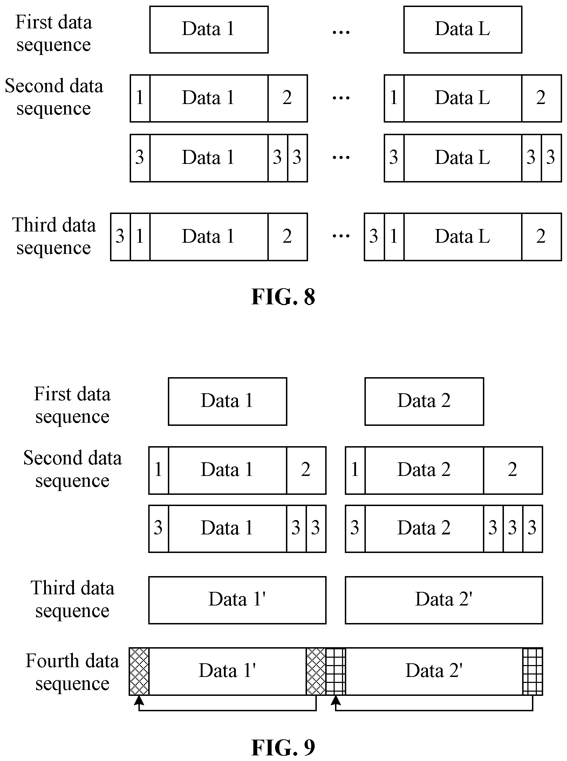

In an example embodiment, before the L to-be-sent data sequences are transmitted, each of the data sequences may be processed. FIG. 8 is an exemplary diagram of another data sequence according to an embodiment of the present application. Referring to FIG. 8, a sequence 1 and a sequence 2 may be inserted in front of and behind each of the L to-be-transmitted first data sequences respectively so that L second data sequences are formed, where the sequence 1 is constituted by M sequences 3, and the sequence 2 is constituted by N sequences 3. In the embodiment of the present application, a value of M is 1, and a value of N is 2. K sequences 3 are added to the front of each of the L second data sequences so that third data sequences are formed, where T₃ denotes the time length of a time domain of a sequence 3, the sequence 3 may satisfy that KT₃ = T_{cp}, and T_{cp} denotes the time length of a cyclic prefix. In the embodiment of the present application, K = 1. The L third data sequences generated through the processing may be transmitted.

In an example embodiment, before the L to-be-sent data sequences are transmitted, each of the data sequences may be processed. FIG. 9 is an exemplary diagram of another data sequence according to an embodiment of the present application. A sequence 1 and a sequence 2 are inserted in front of and behind data 1, the first one of to-be-transmitted first data sequences respectively so that the first one of second data sequences is formed, where the sequence 1 is constituted by one sequence 3, the sequence 2 is constituted by two sequences 3, a value of M in the first one of the second data sequences is 1, and a value of N in the first one of the second data sequences is 2. A sequence 1 and a sequence 2 are inserted in front of and behind data 2, the second one of the to-be-transmitted first data sequences respectively so that the second one of the second data sequences is formed, where the sequence 1 is constituted by one sequence 3, the sequence 2 is constituted by three sequences 3, a value of M in the second one of the second data sequences is 1, and a value of N in the second one of the second data sequences is 3. The value of M in the first one of the second data sequences is the same as the value of M in the second one of the second data sequences, and the value of N in the first one of the second data sequences is different from the value of N in the second one of the second data sequences. The length of the data 1 is different from the length of the data 2, and the length of the first one of the formed second data sequences is the same as the length of the second one of the second data sequences. The Fourier transform and the inverse Fourier transform are performed on the L second data sequences separately and then the first one of third data sequences and the second one of the third data sequences are formed. The L formed third data sequences have the same length, and the time domain length of a second data sequence is equal to the time domain length of a third data sequence and is equal to the reciprocal of a subcarrier spacing.

A rear portion having a length of KT₃ in data 1', the first one of the third data sequences, may be added to the front of the data 1' so that the first one of four data sequences is formed. A rear portion having a length of KT₃ in data 2', the second one of the third data sequences, may be added to the front of the data 2' so that the second one of the four data sequences is formed, where T₃ denotes the time length of a time domain of a sequence 3, and a value of K is 1. The length of the first one of the fourth data sequences is the same as the length of the second one of the fourth data sequences, and the same cyclic prefix is added to the first one of the fourth data sequences and the second one of the fourth data sequences. Since the length of the data 1 is different from the length of the data 2, the length of the first one of the generated fourth data sequences is the same as the length of the second one of the generated fourth data sequences after the cyclic prefix is added, and the capability of the first one of the fourth data sequences to resist a multipath delay is different from the capability of the second one of the fourth data sequences to resist the multipath delay. In the case where the length of the data 1 is greater than the length of the data 2, the capability of the first one of the fourth data sequences to resist the multipath delay is lower than the capability of the second one of the fourth data sequences to resist the multipath delay.

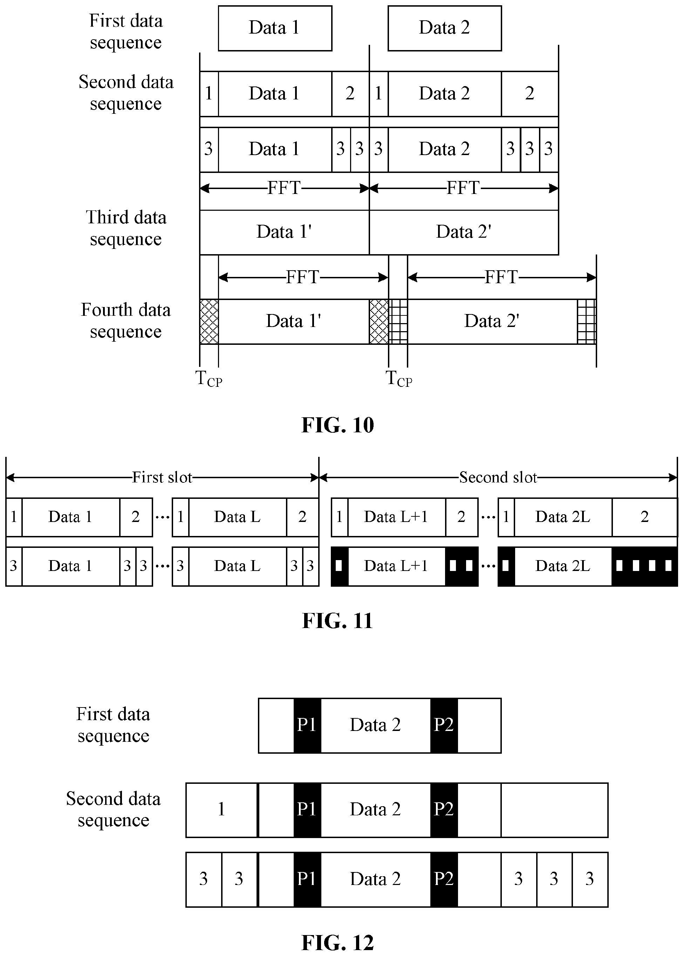

In an example embodiment, before the L to-be-sent data sequences are transmitted, each of the data sequences may be processed. FIG. 10 is an exemplary diagram of another data sequence according to an embodiment of the present application, which shows first data sequences, second data sequences, fourth data sequences, and the time relationship between the fourth data sequences. Referring to FIG. 10, a sequence 1 and a sequence 2 are inserted in front of and behind data 1 of the to-be-transmitted first data sequences respectively so that the first one of the second data sequences is formed, where the sequence 1 is constituted by one sequence 3, and the sequence 2 is constituted by two sequences 3. A sequence 1 and a sequence 2 are inserted in front of and behind data 2, the second one of the to-be-transmitted second data sequences respectively, where the sequence 1 is constituted by one sequence 3, and the sequence 2 is constituted by three sequences 3.

In the embodiment of the present application, the Fourier transform and the inverse Fourier transform may be performed on the two formed second data sequences separately so that two third data sequences are formed. The time domain length of a second data sequence is equal to the time domain length of a third data sequence. The start position of a second data sequence is the start position of Fourier transform processing and the end position of the second data sequence is the end position of Fourier transform processing., and the length of the third data sequence is a window length for the Fourier transform processing. A rear portion having a length of T₃ in each of the two third data sequences is added to the front of the third data sequence so that the two fourth data sequences are formed, where T₃ denotes the time length of a time domain of the sequence 3 and is equal to the length of a cyclic prefix. In the embodiment of the present application, a value of K may be 1. The length of a fourth data sequence is the length of a data block or the length of an orthogonal frequency-division multiplexing (OFDM) symbol. That is, the length of the data block or the length of the OFDM symbol is equal to the sum of the window length for the FFT processing and the time length of the cyclic prefix, that is, the spacing between adjacent data blocks or the spacing between adjacent symbols is greater than the length of the third data sequence.

In an example embodiment, L second data sequences are transmitted in adjacent slots. FIG. 11 is an exemplary diagram of another data transmission method according to an embodiment of the present application. Referring to FIG. 11, the adjacent slots are a first slot and a second slot separately. There are L data blocks in the first slot, the L second data sequences are transmitted in the L data blocks in the first slot, a sequence 1 in each of the L second data sequences is constituted by M sequences 3, and a sequence 2 in each of the L second data sequences is constituted by N sequences 3. There are L data blocks in the second slot, the L second data sequences are transmitted in the L data blocks in the second slot, a sequence 1 in each of the L second data sequences is constituted by M sequences 3, and a sequence 2 in each of the L second data sequences is constituted by N sequences 3. Sequences 3 in the first slot are the same, sequences 3 in the second slot are the same, the sequences 3 in the first slot are different from the sequences 3 in the second slot, and the content of a sequence 3 may be related to a slot.

In an example embodiment, a first data sequence includes P pieces of reference sequence data. FIG. 12 is an exemplary diagram of another data sequence according to an embodiment of the present application. Referring to FIG. 12, the first data sequence includes a data sequence, a reference sequence P1, and a reference sequence P2. The data sequence in the first data sequence is a data sequence modulated by π/2 binary phase shift keying (BPSK). In another embodiment, the data sequence included in the first data sequence may be modulated in another modulation manner, for example, amplitude modulation, frequency modulation, and phase modulation. The reference sequence in the first data sequence may be another reference sequence. Each of the reference sequence P1, the reference sequence P2, a sequence 1, and a sequence 2 in the first data sequence in the embodiment of the present application may be a sequence already known by a receiving end, for example, a sequence which has been received by the receiving end or a pre-configured sequence.

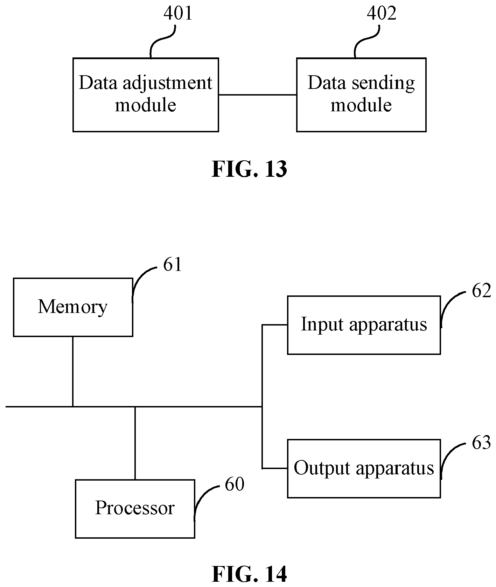

FIG. 13 is a structural diagram of a data transmission apparatus according to an embodiment of the present application. The data transmission apparatus may perform the data transmission method according to any embodiment of the present application and has functional modules and effects corresponding to the performed method. The apparatus may be implemented by software and/or hardware. The apparatus includes a data adjustment module 401 and a data sending module 402.

The data adjustment module 401 is configured to insert a sequence 1 in front of each first data sequence among L to-be-transmitted first data sequences and insert a sequence 2 behind each first data sequence to form L second data sequences, where L is an integer and L ≥ 2, the sequence 1 includes M sequences 3, the sequence 2 includes N sequences 3, each of M and N is an integer greater than 0, and a sequence 3 satisfies that KT₃ = T_{cp}, where T₃ denotes the time length of a time domain of the sequence 3, K is an integer and 0 < K ≤ N, and T_{cp} denotes the time length of a cyclic prefix.

The data sending module 402 is configured to transmit the L second data sequences.

In the embodiment of the present application, the data adjustment module 401 inserts the sequence 1 and the sequence 2 in front of and behind each to-be-transmitted first data sequence respectively so that a second data sequence is formed, where the inserted sequence 1 and the inserted sequence 2 are constituted by multiple sequences 3 separately and the data sending module 402 sends the generated multiple second data sequences. Thus, the data in front of the data sequence is equal to the data behind the data sequence, which is conducive to maintaining the signal continuity of the data sequence in a time domain and can reduce the spectral leakage between subbands.

Based on the preceding embodiment of the present application, the data sending module 402 includes a transform processing unit, a cyclic prefix unit, and a sequence transmission unit.

The transform processing unit is configured to perform a Fourier transform and an inverse Fourier transform on the L second data sequences separately so that L third data sequences are formed.

The cyclic prefix unit is configured to add a cyclic prefix to each of the L third data sequences so that L fourth data sequences are formed.

The sequence transmission unit is configured to transmit the L fourth data sequences.

Based on the preceding embodiment of the present application, the cyclic prefix unit is configured to perform the operation below.

For each third data sequence, a rear portion having a length of KT₃ in the third data sequence is added to the front of the third data sequence.

Based on the preceding embodiment of the present application, the transform processing unit in the apparatus includes a shaping subunit and an inverse transform subunit.

The shaping subunit is configured to perform the Fourier transform on the L second data sequences and then perform a frequency domain spectrum shaping operation on the L second data sequences in a frequency domain.

The inverse transform subunit is configured to perform the inverse Fourier transform on the L second data sequences subjected to the frequency domain spectrum shaping operation.

Based on the preceding embodiment of the present application, in the transform processing unit, the number of operation points of the inverse Fourier transform is greater than the number of operation points of the Fourier transform.

Based on the preceding embodiment of the present application, in the data sending module 402, the length of the third data sequence is a window length for the Fourier transform processing, and the length of the fourth data sequence is the length of a data block or the length of an orthogonal frequency-division multiplexing (OFDM) symbol.

Based on the preceding embodiment of the present application, in the apparatus, the time domain length of the second data sequence is equal to the time domain length of the third data sequence, and the time domain length of the second data sequence is the reciprocal of a subcarrier spacing.

Based on the preceding embodiment of the present application, in the apparatus, values of M in the L second data sequences are the same, and values of N in the L second data sequences are different.

Based on the preceding embodiment of the present application, in the apparatus, in the case where the values of N in the L second data sequences are different, the L first data sequences have different lengths, the L second data sequences have the same length, the L third data sequences have the same length, and the L fourth data sequences have the same length.

Based on the preceding embodiment of the present application, the L second data sequences in the data sending module 402 are transmitted in the same slot.

Based on the preceding embodiment of the present application, the data sending module 402 includes a first transmission unit and a second transmission unit.

The first transmission unit is configured to transmit the L second data sequences in L adjacent data blocks sequentially.

The second transmission unit is configured to transmit the L second data sequences in L data blocks in adjacent slots.

Based on the preceding embodiment of the present application, the data sending module 402 includes at least one of the cases below.

The L second data sequences are transmitted in the same slot, and sequences 3 in the L second data sequences are the same.

The L second data sequences are transmitted in different slots, and sequences 3 in the L second data sequences are different.

Based on the preceding embodiment of the present application, in the apparatus, each of the sequence 1 and the sequence 2 is a reference sequence, where the reference sequence includes at least one of a preset sequence or a sequence already known by a receiving end.

Based on the preceding embodiment of the present application, in the apparatus, the first data sequence includes data modulated by a constellation point and P pieces of reference sequence data, where P ≥ 0.

Based on the preceding embodiment of the present application, the apparatus further includes a control transmission module.

The control transmission module is configured to transmit control information, where indication information indicating a value of N is carried in the control information.

Based on the preceding embodiment of the present application, in the apparatus, the control transmission module includes a first control unit and a second control unit.

The first control unit is configured to transmit the control information through a downlink control channel or an uplink control channel.

The second control unit is configured to transmit the control information through downlink radio resource control (RRC) signaling or uplink radio resource control (RRC) signaling.

Based on the preceding embodiment of the present application, in the apparatus, the sequence 1 and/or the sequence 2 are a data sequence modulated by π/2 binary phase shift keying (BPSK).

FIG. 14 is a structural diagram of an electronic device according to an embodiment of the present application. The device electronic includes a processor 60, a memory 61, an input apparatus 62, and an output apparatus 63. One or more processors 60 may be included in the electronic device. One processor 60 is shown as an example in FIG. 14. The processor 60, the memory 61, the input apparatus 62, and the output apparatus 63 in the electronic device may be connected via a bus or in other manners. The connection via a bus is shown as an example in FIG. 14.

As a computer-readable storage medium, the memory 61 may be configured to store software programs and computer-executable programs and modules, for example, modules (the data adjustment module 401 and the data sending module 402) corresponding to the data transmission apparatus in the embodiment of the present application. The processor 60 runs the software programs, instructions, and modules stored in the memory 61 to perform function applications and data processing of the electronic device, that is, the preceding data transmission method is implemented.

The memory 61 may mainly include a program storage region and a data storage region, where the program storage region may store an operating system and an application program required by at least one function, and the data storage region may store data created according to use of the electronic device and the like. In addition, the memory 61 may include a high-speed random-access memory and may also include a non-volatile memory, such as at least one disk memory, a flash memory, or other non-volatile solid-state memories. In some examples, the memory 61 may include memories located remotely relative to the processor 40, and these remote memories may be connected to the electronic device via a network. Examples of the preceding network include, but are not limited to, the Internet, an intranet, a local area network, a mobile communication network, and a combination thereof.

The input apparatus 62 may be configured to receive inputted digital or character information and generate key signal input related to user settings and function control of the electronic device. The output apparatus 63 may include display devices such as a display screen.

Embodiments of the present application further provide a storage medium including computer-executable instructions. When executed by a computer processor, the computer-executable instructions are used for performing a data transmission method. The method includes the steps below.

A sequence 1 is inserted in front of each first data sequence among L to-be-transmitted first data sequences and a sequence 2 is inserted behind each first data sequence so that L second data sequences are formed, where L is an integer and L ≥ 2, the sequence 1 includes M sequences 3, the sequence 2 includes N sequences 3, each of M and N is an integer greater than 0, and a sequence 3 satisfies that KT₃ = T_{cp}, where T₃ denotes the time length of a time domain of the sequence 3, K is an integer and 0 < K ≤ N, and T_{cp} denotes the time length of a cyclic prefix; and the L second data sequences are transmitted.

From the preceding description of the embodiments, the present application may be implemented by means of both software and required general-purpose hardware or by means of hardware. The technical solutions of the present application may be embodied in the form of a software product. The computer software product may be stored in a computer-readable storage medium such as a floppy disk, a read-only memory (ROM), a random-access memory (RAM), a flash memory, a hard disk, or an optical disk of a computer and includes several instructions for causing a computer device (which may be a personal computer, a server, or a network device) to perform the methods in the embodiments of the present application.

Units and modules included in the embodiment of the preceding apparatus are just divided according to functional logic, and the division is not limited to this as long as the corresponding functions can be implemented. Additionally, the names of function units are just intended for distinguishing between each other and are not to limit the scope of the present application.

Some or all steps of the preceding method and function modules/units in the preceding system or device may be implemented as software, firmware, hardware, and suitable combinations thereof.

In the hardware implementation, the division of the preceding function modules/units may not correspond to the division of physical components. For example, one physical component may have multiple functions, or one function or step may be performed jointly by several physical components. Some or all physical components are implementable as software executed by a processor such as a central processing unit, a digital signal processor, or a microprocessor, are implementable as hardware, or are implementable as integrated circuits such as application-specific integrated circuits. Such software may be distributed on computer-readable media. The computer-readable media may include computer storage media (or non-transitory media) and communication media (or transitory media). As known to those of ordinary skill in the art, the term, the computer storage media, includes volatile and non-volatile as well as removable and non-removable media implemented in any method or technology for storing information (such as computer-readable instructions, data structures, program modules, or other data). The computer storage media include, but are not limited to, a RAM, a ROM, an electrically erasable programmable read-only memory (EEPROM), a flash memory, or other memory technologies, a compact disc read-only memory (CD-ROM), a digital versatile disc (DVD) or other optical disc memories, magnetic cassettes, magnetic tapes, magnetic disk memories or other magnetic storage apparatuses, or any other medium used for storing the desired information and accessible by a computer. Moreover, as known to those of ordinary skill in the art, the communication media generally include computer-readable instructions, data structures, program modules, or other data in carriers or in modulated data signals transported in other transport mechanisms and may include any information delivery medium.

## Claims

1. A data transmission method, comprising:
inserting a sequence 1 in front of each first data sequence among L to-be-transmitted first data sequences and inserting a sequence 2 behind each first data sequence to form L second data sequences, wherein L is an integer greater than or equal to 2, the sequence 1 comprises M sequences 3, the sequence 2 comprises N sequences 3, each of M and N is an integer greater than 0, and a sequence 3 satisfies that KT₃ = T_{cp}, wherein T₃ denotes a time length of a time domain of the sequence 3, K is an integer greater than 0 and less than or equal to N, and T_{cp} denotes a time length of a cyclic prefix; and
transmitting the L second data sequences.

2. The method according to claim 1, wherein transmitting the L second data sequences comprises:
performing a Fourier transform and an inverse Fourier transform on the L second data sequences separately to form L third data sequences;
adding a cyclic prefix to each of the L third data sequences to form L fourth data sequences; and
transmitting the L fourth data sequences.

3. The method according to claim 2, wherein adding the cyclic prefix to each of the L third data sequences comprises:
for each third data sequence, adding a rear portion having a length of KT₃ in the each third data sequence to a front of the each third data sequence.

4. The method according to claim 2, wherein performing the Fourier transform and the inverse Fourier transform on the L second data sequences separately comprises:
performing the Fourier transform on the L second data sequences, and then performing a frequency domain spectrum shaping operation on the L second data sequences after the Fourier transform in a frequency domain; and
performing the inverse Fourier transform on the L second data sequences subjected to the frequency domain spectrum shaping operation.

5. The method according to claim 2, wherein a number of operation points of the inverse Fourier transform is greater than a number of operation points of the Fourier transform.

6. The method according to claim 2, wherein a length of a third data sequence among the L third data sequences is a window length for Fourier transform processing, and a length of a fourth data sequence among the L fourth data sequences is a length of a data block or a length of an orthogonal frequency-division multiplexing, OFDM, symbol.

7. The method according to claim 2, wherein a start position of a second data sequence among the L second data sequences is a start position of Fourier transform processing and an end position of a second data sequence among the L second data sequences is an end position of Fourier transform processing.

8. The method according to claim 2, wherein a time domain length of a second data sequence among the L second data sequences is equal to a time domain length of a third data sequence among the L third data sequences, and the time domain length of the second data sequence is a reciprocal of a subcarrier spacing.

9. The method according to claim 1, wherein values of M in the L second data sequences are the same, and values of N in the L second data sequences are different.

10. The method according to claim 2, wherein in a case where values of N in the L second data sequences are different, the L first data sequences have different lengths, the L second data sequences have a same length, the L third data sequences have a same length, and the L fourth data sequences have a same length.

11. The method according to claim 1, wherein the L second data sequences are transmitted in a same slot.

12. The method according to claim 1, wherein transmitting the L second data sequences comprises:
transmitting the L second data sequences in L adjacent data blocks sequentially.

13. The method according to claim 1, wherein transmitting the L second data sequences comprises:
transmitting the L second data sequences in L data blocks in adjacent slots.

14. The method according to claim 1, wherein transmitting the L second data sequences comprises at least one of:
transmitting the L second data sequences in a same slot, wherein sequences 3 in the L second data sequences are the same; or
transmitting the L second data sequences in different slots, wherein sequences 3 in the L second data sequences are different.

15. The method according to claim 1, wherein each of the sequence 1 and the sequence 2 is a reference sequence, wherein the reference sequence comprises at least one of a preset sequence or a sequence already known by a receiving end.

16. The method according to claim 1, wherein the first data sequence comprises data modulated by a constellation point and P pieces of reference sequence data, wherein P is greater than or equal to 0.

17. The method according to claim 1, further comprising:
transmitting control information, wherein indication information indicating a value of N is carried in the control information.

18. The method according to claim 17, wherein transmitting the control information comprises:
transmitting the control information through a downlink control channel or an uplink control channel.

19. The method according to claim 17, wherein transmitting the control information comprises:
transmitting the control information through downlink radio resource control, RRC, signaling or uplink radio resource control, RRC, signaling.

20. The method according to claim 1, wherein at least one of the sequence 1 or the sequence 2 is a data sequence modulated by π/2 binary phase shift keying, BPSK.

21. The method according to claim 1, wherein each of the sequence 1 and the sequence 2 is a ZC sequence.

22. A data transmission apparatus, comprising:
a data adjustment module configured to insert a sequence 1 in front of each first data sequence among L to-be-transmitted first data sequences and insert a sequence 2 behind each first data sequence to form L second data sequences, wherein L is an integer greater than or equal to 2, the sequence 1 comprises M sequences 3, the sequence 2 comprises N sequences 3, each of M and N is an integer greater than 0, and a sequence 3 satisfies that KT₃ = T_{cp}, wherein T₃ denotes a time length of a time domain of the sequence 3, K is an integer greater than 0 and less than or equal to N, and T_{cp} denotes a time length of a cyclic prefix; and
a data sending module configured to transmit the L second data sequences.

23. An electronic device, comprising:
at least one processor; and
a memory configured to store at least one program;
wherein when executed by the at least one processor, the at least one program causes the at least one processor to implement the data transmission method according to any one of claims 1 to 21.

24. A computer-readable storage medium for storing a computer program, wherein when the computer program is executed by a processor, the data transmission method according to any one of claims 1 to 21 is implemented.
